# EUROPÄISCHE PATENTSCHRIFT

(11) **EP 3 082 331 B1**
(45) Veröffentlichungstag und Bekanntmachung des Hinweises auf die Patenterteilung: **09.01.2019**
(21) Anmeldenummer: 16161530.7
(22) Anmeldetag: 22.03.2016
(51) Int. Cl.: H04N 5/225, F16M 11/02, G01D 11/30, G03B 17/02

(54) **SENSOR MIT GEHÄUSE**
SENSOR WITH CASING
CAPTEUR AVEC BOITIER

(30) Priorität: 16.04.2015 DE 102015105824
(43) Veröffentlichungstag der Anmeldung: 19.10.2016
(73) Patentinhaber: SICK AG, 79183 Waldkirch (DE)
(72) Erfinder: Schill, Nikolaus, 79215 Elzach (DE)

(56) Entgegenhaltungen:
- EP-A1- 1 069 410
- CN-U- 204 203 336
- DE-A1-102010 007 320
- DE-A1-102013 104 974
- US-A- 2 791 950
- US-A- 4 570 887
- US-A1- 2011 042 535
- US-B1- 8 942 550

## Beschreibung

Die vorliegende Erfindung betrifft eine Befestigungseinheit für einen Sensor.

Die DE 10 2013 104 974 A1 offenbart eine Befestigungseinheit zur Befestigung eines Sensors an einem Gegenstand, wobei die Befestigungseinheit Befestigungsmittel aufweist, mittels derer die Befestigungseinheit an dem Gegenstand befestigt wird und wobei die Befestigungseinheit eine Schwalbenschwanzführung aufweist, in welcher ein am Sensor vorhandener Schlitten gelagert werden kann, wodurch der Sensor an der Befestigungseinheit befestigt ist, wobei die Befestigungseinheit zwei in unterschiedlichen Ebenen verlaufende Referenzflächen aufweist, die ortsfest an der Befestigungseinheit vorgesehen sind.

Um eine genaue Positionierung von Sensoren zu erhalten, werden oft Positionsstifte verwendet, wie in der EP 1 533 998 B1 beschrieben.

Eine Positionierung mit Stiften bedeutet immer einen Mehraufwand in der Fertigung, da eine Genauigkeit der Schnittstelle direkt mit der Genauigkeit der Stiftgröße und dem Bohrungsdurchmesser zusammenhängt.

Die EP 1 069 410 A1 offenbart eine Vorrichtung zur lösbaren Verankerung eines Sensors in einer Verankerungsnut.

Die US 4 570 887 A offenbart ein Stativ für eine Fotokamera.

Die DE 10 2010 007 320 A1 offenbart einen Haltebügel zur Aufnahme eines Gehäuses und ein Gehäuse zur Aufnahme in einem Haltebügel.

Die US 2011/0042535 A1 offenbart eine Positioniervorrichtung für ein optisches Instrument, insbesondere eine Fotokamera.

Die US 8 942 550 B1 offenbart ein Stativ und einen Halter für einen Heißluftfön.

Die US 2 791 950 A offenbart ein Stativ für eine Stereokamera.

Eine Aufgabe der Erfindung besteht darin, eine sichere, exakte und genaue Befestigung des Sensors an einem Halter zu gewährleisten. Weiter soll eine reproduzierbare Befestigung bei einem Sensortausch ermöglicht werden. Weiter soll ein Austausch des Sensors einfach möglich sein.

Die Aufgabe wird gemäß Anspruch 1 gelöst.

Durch die Referenzflächen ist eine genaue Positionierung des Sensors gewährleistet. Weiter ist eine gute Reproduzierbarkeit der Sensorposition bei einem Sensortausch gewährleistet, da der Ersatzsensor nur wieder mit den Referenzflächen des Halters exakt ausgerichtet werden braucht, wodurch exakt die gleiche Position des Austauschsensors erreicht wird, wie die ursprüngliche Position des Sensors.

Dadurch wird eine Justage bei einem Austausch des Sensors wesentlich vereinfacht, bzw. überflüssig gemacht.

Die Befestigungsschraube liegt an einer Befestigungsfläche des Halters an. Die Befestigungsfläche ist gegenüberliegend zur zweiten Referenzfläche an dem Halter angeordnet. Die Befestigungsfläche kann spiegelsymmetrisch zu der zweiten Referenzfläche angeordnet und ausgebildet sein.

Die Befestigungsschraube weist eine kegelförmige Schraubenspitze auf. Die Fläche der kegelförmigen Schraubenspitze liegt bei einer Befestigung an der Befestigungsfläche des Halters an. Durch die Befestigungsschraube werden jeweils die ersten Referenzflächen und die zweiten Referenzflächen aneinander gedrückt.

Die Befestigungsschrauben sind dabei optional von einer Seite des Gehäuses zugänglich, an welcher das Empfangslicht in das Gehäuse eintritt, also von der ,Blickrichtungsseite' des Sensors. Der Sensor weist an dieser Seite beispielsweise eine Frontscheibe auf. Dadurch ist ein Ein- und Ausbau des Sensors auch möglich, wenn der Sensor ringsum verbaut ist.

Optional ist die Aufnahme einstückig mit dem Gehäuse ausgebildet bzw. verbunden. Dadurch ist die Aufnahme in das Gehäuse integriert. Das Gehäuse und die Aufnahme bestehen dabei aus dem gleichen Material. Dadurch sind die Referenzflächen der Aufnahmen immer automatisch richtig zum Gehäuse ausgerichtet und weisen die gleiche Referenz auf.

Gemäß der Erfindung sind zwei identische Aufnahmen in einem Abstand an dem Gehäuse angeordnet und zwei korrespondierende identische Halter in einem identischen Abstand angeordnet.

Durch die zwei identischen Aufnahmen wird die mechanische Stabilität verbessert.

In Weiterbildung der Erfindung sind die erste Referenzflächen und die zweiten Referenzflächen in unterschiedlichen Ebenen angeordnet. Dadurch wird eine Referenzposition in zwei unterschiedlichen Richtungen gewährleistet.

Gemäß der Erfindung sind die ersten Referenzflächen und die zweiten Referenzflächen in einem spitzen Winkel zueinander angeordnet. Dadurch ist zum einen eine Referenzposition in zwei unterschiedlichen Richtungen gewährleistet. Weiter ist durch den spitzen Winkel eine Keilform gebildet, wodurch der Halter stabil zwischen den zwei Referenzflächen fixiert ist. Durch die im spitzen Winkel angeordneten Referenzflächen wird der Halter zwangsläufig mechanisch in die richtige Position geführt, wodurch eine einfache Positionierung erreicht wird.

In Weiterbildung der Erfindung ist die Befestigungsschraube eine Madenschraube. Eine Madenschraube weist ein durchgängiges Gewinde auf, wobei der Schraubenkopf einen identischen Durchmesser wie das Gewinde aufweist und ebenso von dem Gewinde umgeben ist.

In Weiterbildung der Erfindung ist senkrecht zu der ersten Referenzfläche und senkrecht zu der zweiten Referenzfläche eine dritte Referenzfläche angeordnet. Dadurch wird eine Referenzposition in drei unterschiedlichen Richtungen gewährleistet. Dadurch ist der Sensor exakt und eindeutig bestimmbar fixiert.

Gemäß der Erfindung ist der Sensor eine Kamera, nämlich eine 3D-Kamera. Bei der 3D-Kamera handelt es sich beispielsweise um eine Kamera, welche die Lichtlaufzeit auswertet, nämlich eine sogenannte Time-of-flight, kurz TOF-Kamera. Jedoch kann es sich bei der 3D-Kamera auch um eine Stereokamera zur Erfassung von Rauminformationen handeln. Derartige Kameras werden durch die Aufnahme und den Halter exakt ausgerichtet, wodurch eine sehr genaue Position der Kamera gewährleistet ist.

In einer bevorzugten Ausführungsform der Erfindung ist der Halter aus Stahl, insbesondere aus rostfreiem Stahl. Dadurch ist der Halter sehr robust und stabil ausgelegt. Jedoch kann der Halter auch aus einer Aluminiumlegierung, aus einer Zinklegierung, aus einer Magnesiumlegierung oder auch aus Kunststoff gebildet sein.

In einer bevorzugten Ausführungsform der Erfindung bestehen das Gehäuse und die Aufnahme aus Aluminiumdruckguss. Durch Aluminiumdruckguss können auch komplexere Gehäuseformen hergestellt werden, so dass die Aufnahme einstückig mit dem Gehäuse ausgebildet werden kann. Jedoch kann das Gehäuse auch aus einer Aluminiumlegierung, aus einer Zinklegierung, aus Zinkdruckguss, aus einer Magnesiumlegierung oder auch aus Kunststoff gebildet sein.

In Weiterbildung der Erfindung ist an dem Halter ein U-förmiger erster Haltebügel angeordnet. Der U-förmige erste Haltebügel erlaubt eine weitere Befestigung des Halters. Der U-förmige Haltebügel weist hierzu zwei Seitenteile auf. Zwischen den zwei Seitenteilen ist ein Mittelteil angeordnet. An dem Mittelteil ist der Halter angeordnet, beispielsweise mit Befestigungsschrauben angeschraubt. Die Seitenteile weisen ebenso Befestigungsöffnungen, beispielsweise bogen- oder teilkreisförmige Langlöcher auf. Der U-förmige erste Haltebügel ist vorzugsweise einstückig ausgebildet.

In Weiterbildung der Erfindung ist an dem ersten Haltebügel ein zweiter U-förmiger Haltebügel angeordnet, wobei der erste Haltebügel und der zweite Haltebügel verdrehbar zueinander ausgebildet sind. Der U-förmige zweite Haltebügel erlaubt eine weitere Befestigung des ersten Haltebügels. Der U-förmige zweite Haltebügel weist hierzu zwei Seitenteile auf. Zwischen den zwei Seitenteilen ist ein Mittelteil angeordnet. An dem Mittelteil wird beispielsweise eine Verbindung mit einem Maschinenteil angebracht, beispielsweise mit Befestigungsschrauben angeschraubt. Die Seitenteile weisen ebenso Befestigungsöffnungen, beispielsweise bogen- oder teilkreisförmige Langlöcher auf. Der U-förmige erste Haltebügel ist vorzugsweise einstückig ausgebildet. Über die bogen- oder teilkreisförmigen Langlöcher des ersten Haltebügels und/oder des zweiten Haltebügels wird mittels Befestigungsschrauben eine verdrehbare Verbindung zwischen den Haltebügeln ausgebildet.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor mit einem Gehäuse und einer Aufnahme und einem Halter in einer Seitenansicht;
- Figur 2: einen Sensor mit einem Gehäuse und einer Aufnahme und einem Halter in einer Ansicht von unten;
- Figur 3: eine perspektivische Ansicht des Sensors mit Aufnahme und Halter;
- Figur 4 und 5: einen Sensor mit Aufnahme, Halter, erstem und zweitem U-förmigen Haltebügel in einer perspektivischen Ansicht;
- Figur 6: einen Sensor mit Aufnahme, Halter, erstem und zweitem U-förmigen Haltebügel in einer Ansicht von vorne

In den nachfolgenden Figuren sind identische Teile mit identischen Bezugszeichen versehen.

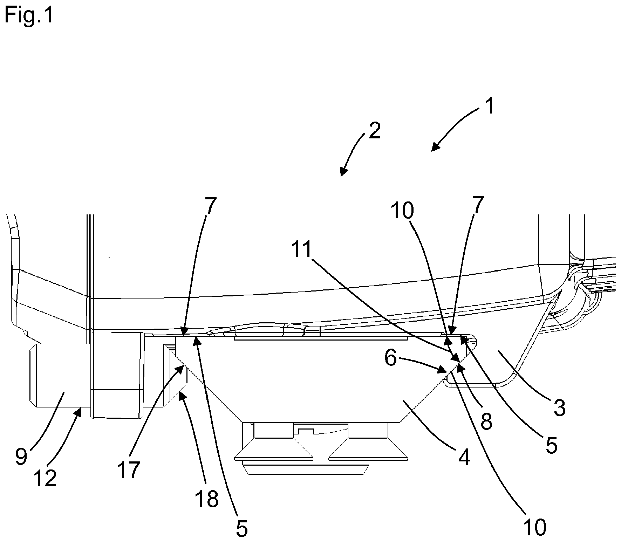

Figur 1 zeigt einen Sensor mit einem Gehäuse 2, wobei das Gehäuse 2 eine Aufnahme 3 für einen Halter 4 aufweist, wobei die Aufnahme wenigstens eine erste Referenzfläche 5 und wenigstens eine zweite Referenzfläche 6 aufweist, wobei der Halter 4 jeweils wenigstens eine dazu korrespondierende erste Referenzfläche 7 und wenigstens eine zweite Referenzfläche 8 aufweist, wobei die Aufnahme 3 des Gehäuses 2 wenigstens eine Befestigungsschraube 9 aufweist und die Befestigungsschraube 9 gegenüberliegend zu der zweiten Referenzfläche 6 an der Aufnahme 3 angeordnet ist und bei einer Befestigung durch die Befestigungsschraube die ersten Referenzflächen und die zweiten Referenzflächen aneinander liegen.

Durch die Referenzflächen 5, 6, 7 und 8 ist eine genaue Positionierung des Sensors 1 bzw. des Gehäuses 2 des Sensors 1 gewährleistet. Weiter ist eine gute Reproduzierbarkeit der Sensorposition bei einem Sensortausch gewährleistet, da ein Ersatzsensor nur wieder mit den Referenzflächen 5, 6, 7 und 8 des Halters 4 exakt ausgerichtet werden braucht, wodurch exakt die gleiche Position des Austauschsensors erreicht wird, wie die ursprüngliche Position des Sensors 1.

Die Befestigungsschraube 9 liegt an einer Befestigungsfläche 17 des Halters 4 an. Die Befestigungsfläche 17 ist gegenüberliegend zur zweiten Referenzfläche 8 an dem Halter 4 angeordnet. Die Befestigungsfläche 17 ist gemäß Figur 1 spiegelsymmetrisch zu der zweiten Referenzfläche 8 angeordnet und ausgebildet.

Die Befestigungsschraube 9 weist eine kegelförmige Schraubenspitze 18 auf. Die Fläche der kegelförmigen Schraubenspitze 18 liegt bei einer Befestigung an der Befestigungsfläche 17 des Halters 4 an. Durch die Befestigungsschraube 9 werden die ersten Referenzflächen 5, 7 und die zweiten Referenzflächen 6, 8 aneinander gedrückt.

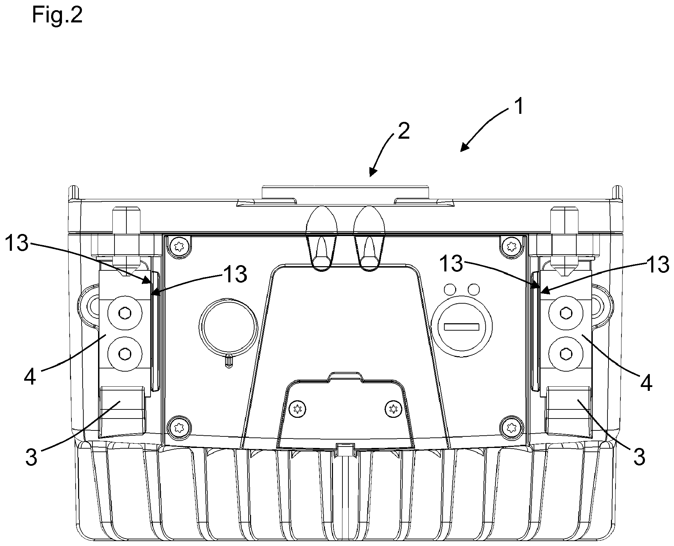

Gemäß Figur 2 sind zwei identische Aufnahmen 3 in einem Abstand an dem Gehäuse 2 angeordnet und zwei korrespondierende identische Halter 4 in einem identischen Abstand angeordnet.

Gemäß Figur 1 sind die ersten Referenzflächen 5, 7 und die zweiten Referenzflächen 6, 8 in unterschiedlichen Ebenen 10 angeordnet. Dadurch wird eine Referenzposition in zwei unterschiedlichen Richtungen gewährleistet.

Gemäß Figur 1 sind die ersten Referenzflächen 5, 7 und die zweiten Referenzflächen 6, 8 in einem spitzen Winkel 11 angeordnet. Dadurch ist zum einen eine Referenzposition in zwei unterschiedlichen Richtungen gewährleistet. Weiter ist durch den spitzen Winkel 11 eine Keilform gebildet, wodurch der Halter 4 stabil zwischen den zwei Referenzflächen 5 und 6 fixiert ist. Durch die im spitzen Winkel 11 angeordneten Referenzflächen 5 und 6 bzw. 7 und 8 wird der Halter 4 zwangsläufig mechanisch in die richtige Position geführt, wodurch eine einfache Positionierung erreicht wird.

Gemäß Figur 1 ist die Befestigungsschraube 9 eine Madenschraube 12. Eine Madenschraube 12 weist ein durchgängiges Gewinde auf, wobei der Schraubenkopf einen identischen Durchmesser wie das Gewinde aufweist und ebenso von dem Gewinde umgeben ist.

Gemäß Figur 2 ist senkrecht zu der ersten Referenzfläche 5 bzw. 7 und senkrecht zu der zweiten Referenzfläche 6 bzw. 8 eine dritte Referenzfläche 13 angeordnet. Dadurch wird eine Referenzposition in drei unterschiedlichen Richtungen gewährleistet. Dadurch ist der Sensor 1 exakt und eindeutig bestimmbar fixiert.

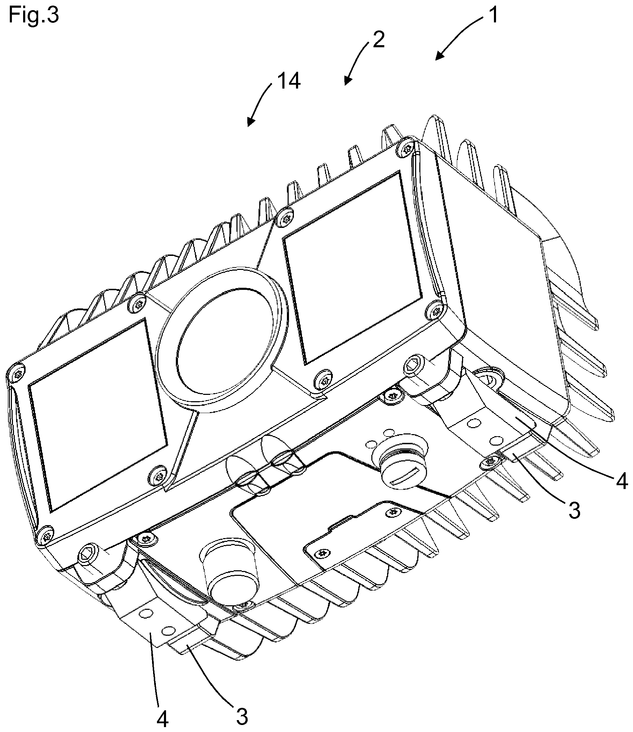

Gemäß Figur 3 ist der Sensor 1 eine Kamera 14, insbesondere eine 3D-Kamera. Bei der 3D-Kamera handelt es sich beispielsweise um eine Kamera, welche die Lichtlaufzeit auswertet, nämlich eine sogenannte Time-of-flight, kurz TOF-Kamera. Jedoch kann es sich bei der 3D-Kamera auch um eine Stereokamera zur Erfassung von Rauminformationen handeln. Derartige Kameras 14 werden durch die Aufnahme 3 und den Halter 4 exakt ausgerichtet, wodurch eine sehr genaue Position der Kamera 14 gewährleistet ist.

Gemäß Figur 1 ist der Halter 4 aus Stahl, insbesondere aus rostfreiem Stahl. Dadurch ist der Halter 4 sehr robust und stabil ausgelegt. Jedoch kann der Halter 4 auch aus einer Aluminiumlegierung, aus einer Zinklegierung, aus einer Magnesiumlegierung oder auch aus Kunststoff gebildet sein.

Gemäß Figur 3 besteht das Gehäuse 2 und die Aufnahme 3 aus Aluminiumdruckguss. Durch Aluminiumdruckguss können auch komplexere Gehäuseformen hergestellt werden, so dass die Aufnahme 3 einstückig mit dem Gehäuse 2 ausgebildet werden kann. Jedoch kann das Gehäuse 2 auch aus einer Aluminiumlegierung, aus einer Zinklegierung, aus Zinkdruckguss, aus einer Magnesiumlegierung oder auch aus Kunststoff gebildet sein.

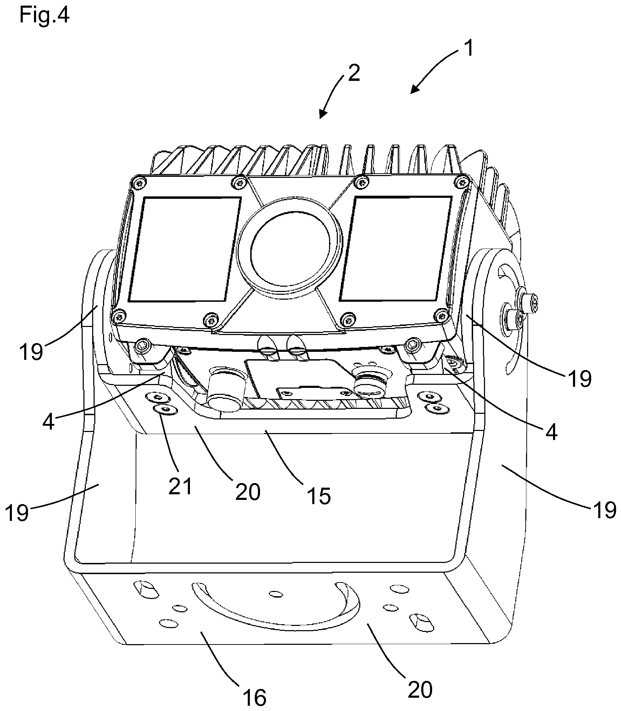

Gemäß Figur 4 ist an dem Halter 4 ein U-förmiger erster Haltebügel 15 angeordnet. Der U-förmige erste Haltebügel 15 erlaubt eine weitere Befestigung des Halters 4. Der U-förmige Haltebügel 15 weist hierzu zwei Seitenteile 19 auf. Zwischen den zwei Seitenteilen 19 ist ein Mittelteil 20 angeordnet. An dem Mittelteil 20 ist der Halter 4 angeordnet, beispielsweise mit Befestigungsschrauben 21 angeschraubt. Die Seitenteile 19 weisen ebenso Befestigungsöffnungen, beispielsweise bogen- oder teilkreisförmige Langlöcher auf. Der U-förmige erste Haltebügel 15 ist vorzugsweise einstückig ausgebildet.

Gemäß Figur 4 ist an dem ersten Haltebügel 15 ein zweiter U-förmiger Haltebügel 16 angeordnet, wobei der erste Haltebügel 15 und der zweite Haltebügel 16 verdrehbar zueinander ausgebildet sind. Der U-förmige zweite Haltebügel 16 erlaubt eine weitere Befestigung des ersten Haltebügels 15. Der U-förmige zweite Haltebügel 16 weist hierzu zwei Seitenteile 19 auf. Zwischen den zwei Seitenteilen 19 ist ein Mittelteil 20 angeordnet. An dem Mittelteil 20 wird beispielsweise eine Verbindung mit einem Maschinenteil angebracht, beispielsweise mit Befestigungsschrauben 21 angeschraubt. Die Seitenteile 19 weisen ebenso Befestigungsöffnungen, beispielsweise bogen- oder teilkreisförmige Langlöcher auf. Der U-förmige erste Haltebügel 15 ist vorzugsweise einstückig ausgebildet. Über die bogen- oder teilkreisförmigen Langlöcher des ersten Haltebügels 15 und/oder des zweiten Haltebügels 16 wird mittels Befestigungsschrauben 21 eine verdrehbare Verbindung zwischen den Haltebügeln 15 und 16 ausgebildet.

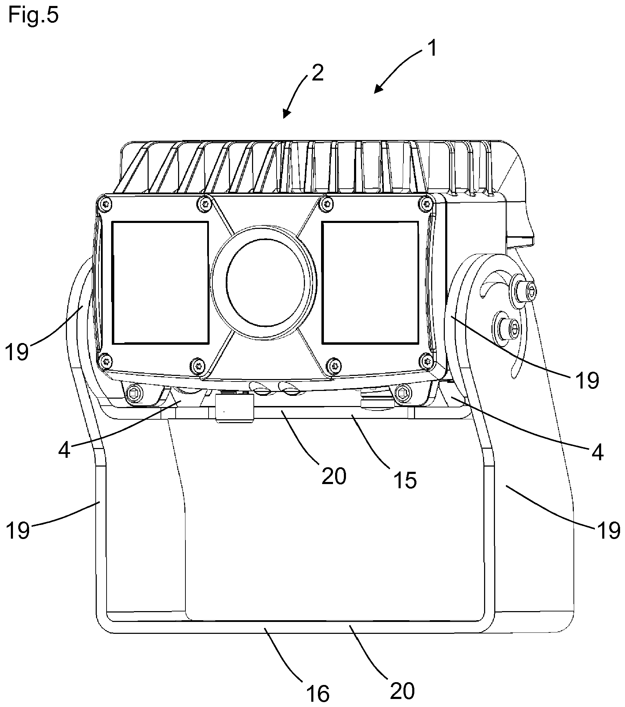

Figur 5 zeigt einen Sensor 1 mit Aufnahme 3, Halter 4, erstem und zweitem U-förmigen Haltebügel 15, 16 in einer weiteren perspektivischen Ansicht.

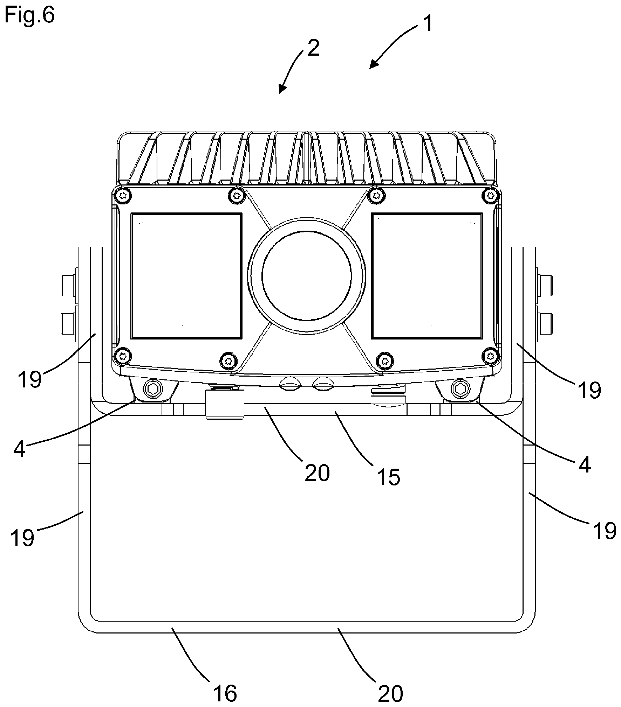

Figur 6 zeigt einen Sensor 1 mit Aufnahme 3, Halter 4, erstem und zweitem U-förmigen Haltebügel 15, 16 in einer Ansicht von vorne.

### Bezugszeichen:

1 Sensor
2 Gehäuse
3 Aufnahme
4 Halter
5 erste Referenzfläche der Aufnahme
6 zweite Referenzfläche der Aufnahme
7 erste Referenzfläche des Halters
8 zweite Referenzfläche des Halters
9 Befestigungsschraube
10 Ebenen
11 spitzen Winkel
12 Madenschraube
13 dritte Referenzfläche
14 Kamera
15 erster U-förmiger Haltebügel
16 zweiter U-förmiger Haltebügel
17 Befestigungsfläche
18 kegelförmige Schraubenspitze
19 Seitenteil
20 Mittelteil
21 Befestigungsschraube

## Patentansprüche

1. Sensor mit einem Gehäuse (2) und einem Halter (4), wobei das Gehäuse (2) eine Aufnahme (3) für den Halter (4) aufweist, wobei die Aufnahme wenigstens eine erste Referenzfläche (5) und wenigstens eine zweite Referenzfläche (6) aufweist, wobei der Halter (4) jeweils wenigstens eine dazu korrespondierende erste Referenzfläche (7) und wenigstens eine zweite Referenzfläche (8) aufweist,
wobei die Aufnahme (3) des Gehäuses (2) wenigstens eine Befestigungsschraube (9) aufweist, wobei die Befestigungsschraube (9) gegenüberliegend zu der zweiten Referenzfläche (6) an der Aufnahme (3) angeordnet ist und bei einer Befestigung durch die Befestigungsschraube (9) die ersten Referenzflächen aneinander liegen und die zweiten Referenzflächen aneinander liegen, wobei die ersten Referenzflächen (5, 7) und die zweiten Referenzflächen (6, 8) in einem spitzen Winkel (11) zueinander angeordnet sind, wobei der Sensor (1) eine 3D-Kamera ist, **dadurch gekennzeichnet, dass** die Befestigungsschraube (9) an einer Befestigungsfläche (17) des Halters (4) anliegt, wobei die Befestigungsschraube (9) eine kegelförmige Schraubenspitze (18) aufweist und zwei identische Aufnahmen (3) in einem Abstand an dem Gehäuse (2) angeordnet sind.

2. Sensor nach Anspruch 1, **dadurch gekennzeichnet, dass** die ersten Referenzflächen (5, 7) und die zweiten Referenzflächen (6, 8) in unterschiedlichen Ebenen (10) angeordnet sind.

3. Sensor nach einem der vorhergehenden Ansprüche, **dadurch gekennzeichnet, dass** die ersten Referenzflächen (5, 7) und die zweiten Referenzflächen (6, 8) in einem spitzen Winkel (11) zueinander angeordnet sind.

4. Sensor nach einem der vorhergehenden Ansprüche, **dadurch gekennzeichnet, dass** die Befestigungsschraube (9) eine Madenschraube (12) ist.

5. Sensor nach einem der vorhergehenden Ansprüche , **dadurch gekennzeichnet, dass** senkrecht zu der ersten Referenzfläche (5) und senkrecht zu der zweiten Referenzfläche (7) eine dritte Referenzfläche (13) angeordnet ist.

6. Sensor nach einem der vorhergehenden Ansprüche, **dadurch gekennzeichnet, dass** der Halter (4) aus Stahl ist.

7. Sensor nach einem der vorhergehenden Ansprüche, **dadurch gekennzeichnet, dass** das Gehäuse (2) und die Aufnahme (3) aus Aluminiumdruckguss besteht.

8. Sensor nach einem der vorhergehenden Ansprüche, **dadurch gekennzeichnet, dass** an dem Halter (4) ein U-förmiger erster Haltebügel (15) angeordnet ist.

9. Sensor nach einem der vorhergehenden Ansprüche, **dadurch gekennzeichnet, dass** an dem ersten Haltebügel (15) ein zweiter U-förmiger Haltebügel (16) angeordnet ist, wobei der erste Haltebügel (15) und der zweite Haltebügel (16) verdrehbar zueinander ausgebildet sind.

## Claims

1. Sensor having a housing (2) and a holder (4), the housing (2) having a receptacle (3) for the holder (4), the receptacle having at least one first reference surface (5) and at least one second reference surface (6), the holder (4) each having at least one first reference surface (7) corresponding thereto and at least one second reference surface (8), the housing (2) having at least one fastening screw (9), the fastening screw (9) being arranged on the receptacle (3) opposite the second reference surface (6), and, when fastened by the fastening screw (9), the first reference surfaces lying against one another and the second reference surfaces lying against one another, the first reference surfaces (5, 7) and the second reference surfaces (6, 8) are arranged at an acute angle (11) to one another, the sensor (1) being a 3D camera, **characterized in that** the fastening screw (9) bears against a fastening surface (17) of the holder (4), the fastening screw (9) having a conical screw tip (18) and two identical receptacles (3) being arranged at a spacing on the housing (2).

2. Sensor according to claim 1, **characterized in that** the first reference surfaces (5, 7) and the second reference surfaces (6, 8) are arranged in different planes (10).

3. Sensor according to one of the preceding claims, **characterized in that** the first reference surfaces (5, 7) and the second reference surfaces (6, 8) are arranged at an acute angle (11) to one another.

4. Sensor according to one of the preceding claims, **characterized in that** the fastening screw (9) is a grub screw (12).

5. Sensor according to one of the preceding claims, **characterized in that** a third reference surface (13) is arranged perpendicular to the first reference surface (5) and perpendicular to the second reference surface (7).

6. Sensor according to one of the preceding claims, **characterized in that** the holder (4) is made of steel.

7. Sensor according to one of the preceding claims, **characterized in that** the housing (2) and the receptacle (3) are made of die-cast aluminium.

8. Sensor according to one of the preceding claims, **characterized in that** a U-shaped first holding bracket (15) is arranged on the holder (4).

9. Sensor according to one of the preceding claims, **characterized in that** a second U-shaped retaining bracket (16) is arranged on the first holding bracket (15), the first holding bracket (15) and the second holding bracket (16) being designed so as to be rotatable relative to one another.

## Revendications

1. Capteur comportant un boîtier (2) et un support (4), le boîtier (2) comportant un réceptacle (3) pour le support (4), le réceptacle comportant au moins une première surface de référence (5) et au moins une seconde surface de référence (6), le support (4) présentant respectivement au moins une première surface de référence (7) correspondante et au moins une seconde surface de référence (8), le boîtier (2) présentant au moins une vis de fixation (9), la vis de fixation (9) étant disposée sur le réceptacle (3) opposé à la seconde surface de référence (6), et, lors de sa fixation par la vis de fixation (9), les premières surfaces de référence s'étendant l'une contre l'autre et les secondes surfaces de référence s'étendant l'une contre l'autre, les premières surfaces de référence (5, 7) et les secondes surfaces de référence (6, 8) étant disposées selon un angle aigu (11), le capteur (1) étant une caméra 3D, **caractérisé en ce que** la vis de fixation (9) repose contre une surface de fixation (17) du support (4), la vis de fixation (9) ayant une pointe conique (18) et deux logements identiques (3) étant disposés à une distance les uns des autres sur le boîtier (2).

2. Capteur selon la revendication 1, **caractérisé en ce que** les premières surfaces de référence (5, 7) et les secondes surfaces de référence (6, 8) sont disposées dans des plans (10) différents.

3. Capteur selon l'une des revendications précédentes, **caractérisé en ce que** les premières surfaces de référence (5, 7) et les secondes surfaces de référence (6, 8) sont disposées l'une par rapport à l'autre selon un angle aigu (11).

4. Capteur selon l'une des revendications précédentes, **caractérisé en ce que** la vis à serrage rapide (9) est une vis sans tête (12).

5. Capteur selon l'une des revendications précédentes, **caractérisé en ce qu'**une troisième surface de référence (13) est disposée perpendiculairement à la première surface de référence (5) et perpendiculaire à la deuxième surface de référence (7).

6. Capteur selon l'une des revendications précédentes, **caractérisé en ce que** le support (4) est en acier.

7. Capteur selon l'une des revendications précédentes, **caractérisé en ce que** le boîtier (2) et le réceptacle (3) consistent de la coulée sous pression d'aluminium.

8. Capteur selon l'une des revendications précédentes, **caractérisé en ce qu'**un premier support en forme de U (15) est disposé sur le support (4).

9. Capteur selon l'une des revendications précédentes, **caractérisé en ce qu'**un deuxième support en forme de U (16) est disposé sur le premier support (15), le premier support (15) et le deuxième support (16) étant conçus de manière tournable l'un par rapport à l'autre.
